(19) Europäisches Patentamt
European Patent Office
Office européen des brevets

(11) Veröffentlichungsnummer : **0 121 205 B1**

(12) # EUROPÄISCHE PATENTSCHRIFT

(45) Veröffentlichungstag der Patentschrift : **03.01.90**

(51) Int. Cl.$^5$ : **C 08 G 75/02**

(21) Anmeldenummer : **84103297.2**

(22) Anmeldetag : **26.03.84**

(54) **Verfahren zur Hestellung von gegebenenfalls verzweigten Polyarylensulfiden.**

(30) Priorität : **05.04.83 DE 3312284**

(43) Veröffentlichungstag der Anmeldung : **10.10.84 Patentblatt 84/41**

(45) Bekanntmachung des Hinweises auf die Patenterteilung : **03.01.90 Patentblatt 90/01**

(84) Benannte Vertragsstaaten : **BE DE FR GB IT NL**

(56) Entgegenhaltungen :
EP–A– 0 065 689
EP–A– 0 075 769
FR–A– 2 312 523
US–A– 4 039 518
US–A– 4 096 132

(73) Patentinhaber : **BAYER AG**

**D-5090 Leverkusen 1 Bayerwerk (DE)**

(72) Erfinder : **Idel, Karsten, Dr.**
**Scheiblerstrasse 81**
**D-4150 Krefeld (DE)**
Erfinder : **Ostlinning, Edgar, Dr.**
**Rembrandtstrasse 37**
**D-4000 Düsseldorf (DE)**
Erfinder : **Koch, Wolfgang**
**Bleichstrasse 14**
**D 6339 Bischoffen II (DE)**
Erfinder : **Bottenbruch, Ludwig, Dr.**
**Wöhlerstrasse 5**
**D-4150 Krefeld (DE)**
Erfinder : **Heitz, Walter, Prof. Dr.**
**Am Schmidtborn 5**
**D-3575 Kirchhain (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 121 205 B1

**Beschreibung**

Die Erfindung betrifft ein neues Verfahren zur Herstellung von gegebenenfalls verzweigten Polyarylensulfiden aus gegebenenfalls substituierten Halogenbenzolen im Gemisch mit Polyhalogenaromaten und Alkalisulfiden in polaren Lösungsmitteln in Gegenwart von Agentien, die reduzierende Eigenschaften haben.

Polyarylensulfide sind bekannt (vgl. US-PS 2 538 941 und 2 513 188). Sie können aus den entsprechenden Halogenaromaten und Alkali- oder Erdalkalisulfiden hergestellt werden. So werden z. B. nach dem in der US-PS 3 354 129 beschriebenen Verfahren monomere und polymere Sulfide durch Umsetzung mindestens einer cyclischen Verbindung, die eine Doppelbindung zwischen benachbarten Ringatomen enthält, und die wenigstens durch ein Halogenatom substituiert ist, mit einem Alkalisulfid in einem polaren Lösungsmittel hergestellt. Polyhalogenverbindungen können als Verzweiger eingesetzt werden.

Aus der DE-AS 2 453 749 ist die Verwendung von Carboxylaten als Reaktionsbeschleuniger sowie die zusätzliche Verwendung von Thioverbindungen als Schwefelspender bekannt. Aus der DE-OS 2 623 363 bzw. der US-PS 4 038 261 ist für die Herstellung von Arylensulfidpolymeren die Verwendung von Lithiumchlorid oder Lithiumcarboxylaten als Katalysator bekannt.

Nach der US-PS 4 038 259 werden Alkalicarbonate im Kombination mit Alkalicarboxylaten, und gemäß US-PS 4 038 263 Lithiumhalogenide als Katalysatoren, für die Polyphenylensulfidherstellung eingesetzt. Nach der DE-OS 2 623 362 und US-PS 4 038 262 werden Lithiumhalogenide oder Alkalicarboxylate zusammen mit Kohlendioxid als Katalysator für die Herstellung von Arylensulfidpolymeren verwendet.

Weiterhin ist z. B. aus der US-PS 4 038 260 die Verwendung von Alkalimetallsulfonaten und aus der US-PS 4 039 518 die Verwendung von Lithiumcarbonat und Lithiumborat als Katalysator bekannt.

Gemäß US-PS 4 096 132 werden unverzweigte p-Polyphenylensulfide mit leicht erhöhter Schmelzviskosität erhalten, wenn in Gegenwart von Alkalicarboxylat, bevorzugt Lithiumacetat und Alkalihydroxiden umgesetzt wird.

Polyarylensulfide mit verringertem Schmelzfließverhalten können unter Verwendung von Trialkaliphosphat-Katalysatoren (DE-OS 2 930 710) oder Alkaliphosphonat-Katalysatoren (DE-PS 2 930 797) erhalten werden.

Aus der DE-OS 2 623 333 ist bekannt, zuerst das Hydratwasser des als Katalysator eingesetzten Lithiumacetats und in einem zweiten Schritt das Hydratwasser des Natriumsulfidhydrats zu entfernen.

Im allgemeinen werden die p-Polyphenylensulfide durch eine Kettenverlängerungs- und Verzweigungsreaktion, einem Härtungs- oder Curingschritt unterzogen (z. B. US-PS 3 727 620, US-PS 3 524 835, US-PS 3 839 301). Ohne diesen Härtungsschritt besitzen die p-Polyphenylensulfide im allgemeinen eine niedrige Schmelzviskosität, die eine thermoplastische Verarbeitung kaum zuläßt.

Gemäß US-PS 3 919 177 soll mit Hilfe von Lithiumcarboxylaten als Katalysator erreicht werden, daß das erzeugte p-Polyphenylensulfid ohne vorherige Härtung zu Fasern schmelzversponnen werden kann. In der US-PS 4 116 947 bzw. DE-OS 2 817 731 wird beschrieben, daß durch eine bestimmte Menge Restwasser bewirkt wird, daß die p-Polyphenylensulfide ohne Härtungsschritt zu Fasern versponnen und extrudiert, sowie formgepreßt werden können.

Der Erfindung liegt die Erkenntnis zugrunde, daß verzweigte Polyarylensulfide mit hoher Schmelzviskosität und hohem Molekulargewicht erhalten werden können, wenn man in an sich bekannter Weise Di- und Polyhalogenbenzole und Alkalisulfide in bestimmten polaren Lösungsmitteln kondensiert und die Umsetzung zusätzlich in Gegenwart von 0,02 bis 0,8 Mol-% (bezogen auf 1 Mol Alkalisulfid) eines Reduktionsmittels durchführt.

Die erhaltenen Polyarylensulfide können ohne härtende Nachbehandlung formgepreßt, extrudiert und zu Fasern versponnen werden. Sie haben im Vergleich zu den bisher marktgängigen Polyarylensulfiden wesentlich verbesserte mechanische Eigenschaften.

Gegenstand der Erfindung ist ein Verfahren zur Herstellung von gegebenenfalls verzweigten, hochmolekularen Polyarylensulfiden mit hoher Schmelzviskosität, dadurch gekennzeichnet, daß

a) Dihalogenbenzole, von denen 0 bis 100 Mol-%, vorzugsweise 50 bis 100 Mol-% der Formel (I)

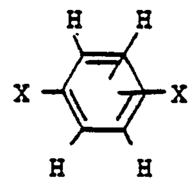

(I)

entsprechen und 0 bis 100 Mol-%, vorzugsweise 0 bis 50 Mol-% der Formel (II)

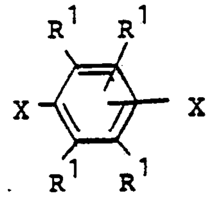

(II)

in denen

X für zueinander meta- oder para-ständiges Chlor oder Brom steht und

$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, wobei zwei zueinander orthoständige Reste $R^1$ zu einem aromatischen oder heterocyclischen 6-gliedrigen Ring, der bis zu drei Heteroatome wie O, N, S enthalten kann, verknüpft sein können, und immer ein Rest $R^1$ verschieden von Wasserstoff ist und

b) 0 bis 3,0 Mol-%, bevorzugt 0,4 bis 2,0 Mol-%, bezogen auf die Summe der Dihalogenaromaten der Formel (I) und (II), eines Tri- oder Tetrahalogenaromaten der Formel (III)

$$ArX_n \qquad (III)$$

wobei

Ar ein aromatischer oder heterocyclischer Rest, der bis zu drei Heteroatome wie N, O, S enthalten kann, mit 6-24 C-Atomen ist,

X für Chlor oder Brom steht und

n 3 oder 4 ist,

c) Alkalisulfide, bevorzugt Natrium- oder Kaliumsulfid oder deren Mischung, bevorzugt in Form der Hydrate oder wäßriger Mischungen, gegebenenfalls zusammen mit Alkalihydroxiden wie Natrium- und Kaliumhydroxid, wobei das molare Verhältnis von (a + b) : c im Bereich von 0,85 : 1 bis 1,15 : 1, bevorzugt 0,95 : 1 bis 1,05 : 1 liegt,

d) in einem polaren Lösungsmittel, gegebenenfalls in Anwesenheit von weiteren Cosolventien und gegebenenfalls in Gegenwart von Katalysatoren, wobei das molare Verhältnis von c) zu d) im Bereich von 1 : 2 bis 1 : 15 liegt,

in Gegenwart von Reduktionsmitteln ausgewählt aus der Gruppe der Hydrazine, Borhydride und Alkaliformate.

Als Katalysatoren können für diesen Zweck übliche Substanzen in üblichen Mengen eingesetzt werden, beispielsweise Alkalifluoride, Alkaliphosphate und Alkalicarboxylate. Pro Mol Alkalisulfid können 0,02 bis 1 Mol Katalysator eingesetzt werden.

Beispiele für erfindungsgemäß einzusetzende Dihalogenaromaten der Formel (I) sind: m-Dichlorbenzol, p-Dichlorbenzol, p-Dibrombenzol, m-Dibrombenzol, 1-Chlor-4-brombenzol. Sie sind allein oder im Gemisch miteinander verwendbar.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Beispiele für erfindungsgemäß einzusetzende Tri- oder Tetrahalogenaromaten der Formel (III) sind: 1,2,3-Trichlorbenzol, 1,2,4-Trichlorbenzol, 1,2,4-Tribrombenzol, 1,3,5-Trichlor-2,4,6-trimethyl-benzol, 1,2,3-Trichlornaphthalin, 1,2,4-Trichlor-naphtalin, 1,2,6-Trichlor-naphtalin, 2,3,4-Trichlortoluol, 2,4,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlor-triazin.

Werden Tri- und/oder Tetrahalogenaromaten der Formel (III) eingesetzt, werden verzweigte Polyarylensulfide erhalten.

Die Alkalisulfide, bevorzugt Kalium- und Natriumsulfid, werden vorzugsweise in Form ihrer Hydrate oder wäßrigen Mischungen eingesetzt. Weiterhin können sie aus Schwefelwasserstoff und entsprechenden Alkalihydroxiden oder aus Alkalihydrogensulfiden und entsprechenden Alkalihydroxiden in der Reaktionslösung direkt hergestellt werden. Es können Mischungen der Alkalisulfide eingesetzt werden.

Je nach Anteil von Alkalihydrogensulfid in der Reaktionslösung, das als Verunreinigung im Alkalisulfid enthalten sein kann oder während des Reaktionsprozesses entstehen kann, wird zusätzlich stöchiometrisch Alkalihydroxid zur Regenerierung von Alkalisulfid zudosiert. Gegebenenfalls können anstelle der Alkalihydroxide solche Verbindungen zugegeben werden, die unter den Reaktionsbedingungen Alkalihydroxide abspalten bzw. bilden.

Als Alkalihydroxide kommen z. B. Lithiumhydroxid, Natriumhydroxid und Kaliumhydroxid sowie deren Mischungen in Frage, vorzugsweise Natriumhydroxid.

Generell kann jedes polare Lösungsmittel für die Reaktion eingesetzt werden, das eine ausreichende Löslichkeit der organischen und anorganischen Reaktanten unter den Reaktionsbedingungen gewährleistet. Bevorzugt werden Amide, Lactame und Harnstoffe, besonders bevorzugt N-alkylierte Amide,

Lactame und cyclische Harnstoffe verwendet.

Im erfindungsgemäßen Verfahren verwendbare Lactame sind Lactame von Aminosäuren mit 3 bis 5 C-Atomen, die gegebenenfalls Substituenten am Kohlenstoffgerüst tragen können, die unter Reaktionsbedingungen inert sind, z. B. einen Alkylrest mit 1 bis 5 C-Atomen.

Im erfindungsgemäßen Verfahren verwendbare N-Alkyllactame sind wie die erfindungsgemäßen Lactame definiert, tragen jedoch zusätzlich am Stickstoffatom einen Alkylrest mit 1 bis 6 C-Atomen.

Im erfindungsgemäßen Verfahren verwendbare tetraalkylierte Harnstoffe entsprechen der Formel (IV)

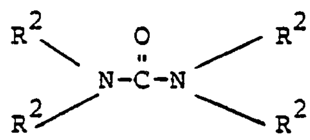

(IV)

in der

$R^2$ gleich oder verschieden sein kann und einen $C_1$- bis $C_4$-Alkylrest bedeutet, sowie cyclische Harnstoffe der Formel (V)

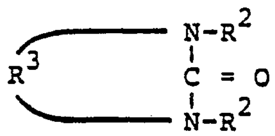

(V)

in der

$R^2$ die obengenannte Bedeutung hat und bevorzugt für Methyl steht und

$R^3$ ein Ethylen- oder Propylenrest, der auch substituiert sein kann, ist.

Beispielsweise kommen als Lösungsmittel in Frage :

N,N-Dimethylformamid, N,N-Dimethylacetamid, N,N-Diethylacetamid, N,N-Dipropylacetamid, N,N-Dimethylbenzoesäureamid, Caprolactam, N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isopropyl-2-piperidon, N-Isobutyl-2-piperidon, N-Methyl-6-methyl-2-piperidon, N-Methyl-3-ethyl-2-piperidon, N-Methyl-2-oxo-hexamethylenimin, N-Ethyl-2-oxo-hexamethylenimin, Tetramethylharnstoff, 1,3-Dimethylethylenharnstoff, 1,3-Dimethyl-propylenharnstoff.

Es können Mischungen der vorstehenden Lösungsmittel gewählt werden.

Als Agentien, die reduzierende Eigenschaften besitzen, werden erfindungsgemäß Reduktionsmittel wie Hydrazine, Borhydride und Alkaliformiate eingesetzt.

Die Hydrazine entsprechen der Formel (VI)

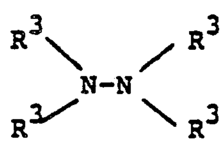

(VI)

in welcher $R^3$ gleich oder verschieden ist und Wasserstoff oder einen $C_1$- bis $C_4$-Alkylrest, vorzugsweise Wasserstoff bedeutet, eingesetzt.

Hydrazin wird als Hydrat eingesetzt, kann aber auch in konzentrierter wäßriger Lösung verwendet werden.

Als Borhydride werden Alkaliborhydride wie Lithium-, Natrium- oder Kalium-borhydrid, vorzugsweise Natriumborhydrid ($NaBH_4$) verwendet.

Als Alkaliformiate werden Lithium-, Natrium- oder Kaliumformiat, vorzugsweise Natriumformiat (HCOONa) verwendet.

Die Kondensationstemperatur ist in der Regel 160 bis 300 °C, bevorzugt 200 bis 285 °C. Die Reaktionszeit kann bis zu 10 Stunden betragen, liegt jedoch vorzugsweise zwischen 0,2 und 8 Stunden. Eine stufenweise Steigerung der Reaktionstemperatur während dieser Zeit kann von Vorteil sein.

Dihalogenbenzol und Alkalisulfid werden etwa äquimolar eingesetzt. Das Molverhältnis Dihalogenbenzol/Alkalisulfid liegt im Bereich von 0,85 : 1 bis 1,15 : 1, bevorzugt von 0,95 : 1 bis 1,05 : 1.

Die erfindungsgemäß einsetzbaren Tri- oder Tetrahalogenaromaten der Formel (III) werden bis zu einer Menge von mehreren Mol-%, bezogen auf die Dihalogenbenzole, zusammen mit den Dihalogenbenzolen oder getrennt zugesetzt. In der Regel wird ein Anteil von 0,2 bis 3,0 Mol-%, vorzugsweise 0,4 bis 2,0 Mol-%, bezogen auf den Anteil Dihalogenbenzol, ausreichend sein.

Die Menge Lösungsmittel kann in einem weiten Bereich gewählt werden, liegt im allgemeinen bei 2 bis 15 Mol pro Mol Alkalisulfid.

Pro Mol Alkalisulfid können bis zu 80 Mol-% Reduktionsmittel eingesetzt werden. Vorzugsweise werden pro Mol Alkalisulfid 2 bis 50 Mol-%, besonders bevorzugt 2,5 bis 25 Mol-% Reduktionsmittel eingesetzt.

Das erfindungsgemäße Verfahren kann wie folgt durchgeführt werden :

Die Alkalisulfide können in einem oder mehreren Schritten, beispielsweise durch Abdestillieren des Wassers aus der Reaktionslösung, entwässert werden. Die partielle Entwässer ng erfolgt vorteilhaft vor der Zugabe der Dihalogenverbindungen der Formeln (I) und (II). Das Alkalisulfid und das Reduktionsmittel können getrennt partiell entwässert werden.

Das Zusammengeben der Reaktanten kann im Prinzip in beliebiger Form erfolgen. Die Dihalogenaromaten der Formeln (I) und (II) und die Polyhalogenaromaten der Formel (III) können zusammen oder getrennt, kontinuierlich in Portionen oder direkt auf einmal zu dem Alkalisulfid, dem Lösungsmittel oder einem Teil davon und den Reduktionsmitteln und gegebenenfalls dem Katalysator gegeben werden.

Es können aber auch das Alkalisulfid zusammen mit dem Lösungsmittel oder einem Teil davon und den Reduktionsmitteln zu den Verbindungen der Formeln (I) und (II) und den Polyhalogenaromaten (III) gegeben werden. Es können auch alle Reaktanten direkt zusammengegeben werden. Jede andere Kombination der Reaktanten ist ebenfalls möglich.

Eine Entwässerung vor Zugabe des Reduktionsmittels kann in besonderen Fällen, z. B. bei Verwendung von Alkaliborhydriden günstig sein.

Die Aufarbeitung des Reaktionsgemisches kann in mannigfaltiger Weise erfolgen :

Das Polyarylensulfid kann direkt aus der Reaktionslösung oder erst nach Zugabe, z. B. von Wasser und/oder verdünnten Säuren, nach üblicher Verfahrensweise abgetrennt werden, beispielsweise durch Filtration oder durch Zentrifugieren.

Nach der Filtration schließt sich im allgemeinen eine Wäsche mit Wasser an, um anorganische Bestandteile die den Polymeren anhaften können, z. B. Reste von Alkalisulfiden und Alkalichloriden, zu entfernen. Eine Wäsche oder Extraktion mit anderen Waschflüssigkeiten, die auch zusätzlich oder nachträglich zu dieser Wäsche durchgeführt werden kann, ist auch möglich. Das Polymere kann durch Abziehen des Lösungsmittels aus dem Reaktionsraum und eine anschließende Wäsche, wie oben beschrieben, gewonnen werden.

Die erfindungsgemäßen Polyarylensulfide können mit anderen Polymeren, mit Pigmenten und Füllstoffen, beispielsweise Graphit, Metallpulver, Glaspulver, Quarzmehl oder Glasfasern gemischt oder mit den für Polyarylensulfide üblichen Additiven, beispielsweise mit üblichen Stabilisatoren oder Entformungsmitteln versetzt werden.

Im allgemeinen wird das Schmelzfließverhalten von Polyarylensulfiden nach ASTM 1238-70 bei 316 °C unter Verwendung eines 5 kg Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta m$ der Polymerschmelze (in Pa.s) bei 306 °C in Abhängigkeit von der Schubspannung $\tau$ (in Pa) mit Hilfe des Instron-Rotationsviskosimeters (Instron-Rheometer) bestimmt.

Man kann auf diese Weise die Schmelzviskosität in einem sehr weiten Bereich von $10^{-1}$ bis $10^7$ Pa.s bestimmen. In dem Instron-Rheometer wird das Polymer zwischen einer festen Platte und einem drehbaren Kegel aufgeschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde ein Rheometer Modell 3 250 der Fa. Instron ; Durchmesser des Kegels und der Platte 2 cm.

Angegeben wird die Schmelzviskosität, die bei einer Subspannung von $\tau = 10^2$ Pa gemessen wird.

Die erfindungsgemäßen Polyarylensulfide besitzen nach der Isolierung aus dem Reaktionsgemisch im allgemeinen Schmelzviskositäten von $0,5 \times 10^3$ bis $5 \times 10^6$ Pa.s, vorzugsweise von $1,5 \times 10^3$ bis $10^4$ Pa.s. Sie können direkt durch Extrusion, Extrusionsblasen, Spritzgießen oder sonst übliche Verarbeitungstechniken zu Folien, Formkörpern oder Fasern verarbeitet werden, welche in üblicher Weise Verwendung finden z. B. als Automobilteile, Armaturen, Elektroteile, z. B. Schalter, elektronische Tafeln, chemikalienresistente Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile, etc.

## Beispiele

### Vergleichsbeispiel A

Dieses Beispiel beschreibt zum Vergleich die Herstellung von p-Polyphenylensulfid gemäß US-PS 3 354 129.

In einem mit Rührer ausgerüsteten Autoklaven wurden 129 g Natriumsulfid-tri-hydrat (entsprechend 1 Mol $Na_2S$) und 300 g N-Methyl-2-pyrrolidon zusammengegeben. Das Gemisch wurde mit Stickstoff gespült und langsam bis auf 202 °C erwärmt. Dabei destillierten insgesamt 19 ml Wasser ab. Der Ansatz wurde anschließend auf ca. 160 °C abgekühlt und 147 g p-Dichlorbenzol (= 1 Mol) in ca. 50 g N-Methyl-2-pyrrolidon hinzugefügt. Man erwärmt das Reaktionsgemisch unter einem Stickstoffvordruck von 2,5 bar in 30 Minuten auf 245 °C, wobei der Druck auf 10 bar ansteigt und hält diese Temperatur 3 Stunden. Nach Abkühlen auf Raumtemperatur wird ein grauer Feststoff isoliert, der anschließend mit Wasser gewaschen wird.

Man trocknet bei 80 °C im Vakuum und erhält 100,3 g (93 %) Poly-p-phenylensulfid mit folgenden Kenndaten :

Schmelzviskosität $\eta m = 4{,}5$ Pa.s (bei $\tau = 10^2$ Pa). Eine thermoplastische Verarbeitung ist ohne Härtung nicht möglich.

Vergleichsbeispiel B

Dieses Beispiel beschreibt zum Vergleich die Herstellung von p-Polyphenylensulfid gemäß US-PS 40 96 132.

In einem mit Rührer ausgerüstetem Autoklaven wurden 130,1 g Natriumsulfidhydrat (entsprechend 1 Mol $Na_2S$), 101,2 g Lithiumacetatdihydrat (0,99 Mol), 9,2 g NaOH (0,23 Mol) und 400 ml N-Methylpyrrolidon (2) vorgelegt. Das Gemisch wurde mit Stickstoff gespült und langsam bis auf 202 °C erwärmt. Das erhaltene Destillat bestand im wesentlichen aus $H_2O$. Zum verbleibenden Reaktionsgemisch wurden 150,3 g p-Dichlorbenzol (1,02 Mol) und ca. 70 ml N-Methylpyrrolidon (2) gegeben. Das Reaktionsgemisch wurde auf 266 °C aufgeheizt und 3 Stunden bei dieser Temperatur gehalten. Man erhielt nach der Aufarbeitung 87,5 g (81,2 %) hellgraues Poly-p-phenylensulfid mit folgenden Kenndaten : $\eta m = 15$ Pa.s (bei $\tau = 10^2$ Pa). Eine thermoplastische Verarbeitung ist ohne Härtung nicht möglich. ch

Beispiel 1

In einem Stahlautoklaven mit Rührer werden 191,6 g Natriumsulfid-Hydrat (1,455 Mol) zusammen mit 13,3 g 45 %iger Natronlauge, 450 g N-Methylpyrrolidon und 9,6 g einer 50 %igen wäßrigen Hydrazin-Lösung (0,15 Mol ≙ 10 Mol-%) unter Stickstoff vorgelegt. Durch langsames Aufheizen bis auf 175 °C werden 44 ml Destillat erhalten, das größtenteils aus Wasser besteht. Danach werden 220,5 g p-Dichlorbenzol (1,50 Mol) und 2,72 g (0,015 Mol) 1,2,4-Trichlorbenzol in 70 ml N-Methyl-pyrrolidon zugesetzt. Anschließend wird die Reaktion bei 19 bar und 240 °C 5 Stunden gefahren.

Nach Reaktionsende läßt man auf 150 °C abkühlen, entspannt und entnimmt das Reaktionsgemisch. Nach Ansäuern auf pH5 läßt sich das p-Polyarylensulfid leicht durch Filtration isolieren. Man wäscht mit Wasser neutral, filtriert und trocknet das p-Polyarylensulfid, das als grau-weißer Feststoff erhalten wird. Schmelzviskosität $\eta m = 2{,}1 \times 10^3$ Pa.s (gemessen bei $10^2$ Pa).

Beispiel 2

Wie Beispiel 1, jedoch mit 19,2 g einer 50 %igen wäßrigen Hydrazin-Lösung (0,30 Mol ≙ 20 Mol-%). Bei der Entwässerung wurde mit 50 ml Destillat entsprechend mehr Wasser abdestilliert. Schmelzviskosität $\eta m = 2{,}9 \times 10^3$ Pa.s (bei $10^2$ Pa gemessen).

Beispiel 3

Analog der DE-OS 3 120 538 wird bei der Reaktion Dimethylacetamid (19,6 g ≙ 15 Mol-%, bezogen auf 1 Mol Natriumsulfid) zugesetzt. Ansonsten wird der Versuch gemäß Beispiel 1 gefahren, wobei ebenfalls eine entsprechende Menge Natronlauge zur Neutralisation von Natriumhydrogensulfid eingesetzt wird.

Schmelzviskosität des als grau-weißen Feststoff isolierten p-Polyarylensulfids : $\eta m = 1{,}6 \times 10^5$ Pa.s (bei $10^2$ Pa gemessen).

Beispiel 4

Wie Beispiel 3, jedoch mit 1,90 g (0,0105 Mol ≙ 0,7 Mol-%) 1,2,4-Trichlorbenzol als Verzweiger. Schmelzviskosität $\eta m = 2{,}6 \times 10^4$ Pa.s (bei $10^2$ Pa gemessen).

Beispiel 5

Wie Beispiel 4, jedoch mit 1,90 g (0,0105 Mol ≙ 0,7 Mol-%) 1,3,5-Trichlorbenzol als Verzweiger. Schmelzviskosität $m = 5{,}3 \times 10^4$ Pa.s (bei $10^2$ Pa gemessen).

Beispiel 6

Wie Beispiel 1, jedoch mit geänderten Reaktionszeiten. Es wurde in zwei Temperaturstufen 2 Stunden bei 205 °C und 3 Stunden bei 266 °C gefahren. Das enthaltene p-Polyarylensulfid hatte eine Schmelzviskosität $\eta m = 3{,}3 \times 10^3$ Pa.s (gemessen bei $10^2$ Pa).

Beispiel 7

Das p-Polyarylensulfid des Beispiels 4 konnte ohne Schwierigkeiten über eine Schneckenmaschine extrudiert werden und war damit direkt thermoplastisch verarbeitbar. Dagegen waren die p-Polyphenylensulfide der Vergleichsbeispiele A und B nicht thermoplatisch zu verarbeiten.

Das p-Polyarylensulfid des Beispiels 4 zeigte mit $a_n = 26{,}7\ kJ/m^2$ (gemessen nach DIN 53 453) eine für p-Polyarylensulfide ausgezeichnete Schlagzähigkeit.

Beispiel 8

In einem Stahlautoklaven mit Rührer werden 191,6 g Natriumsulfid-Hydrat (1,455 Mol) zusammen mit 13,3 g 45 %iger Natronlauge (zur Neutralisation von im Natriumsulfid enthaltenem Natriumhydrogensulfid) in 450 g N-Methylpyrrolidon unter Stickstoff vorgelegt. Durch langsames Aufheizen bis auf 175 °C werden 39 ml eines Destillats, das hauptsächlich aus Wasser besteht, erhalten.

Anschließend werden 220,5 g p-Dichlorbenzol (1,50 Mol) und 1,63 g (0,009 Mol) 1,2,4-Trichlorbenzol in 70 ml N-Methylpyrrolidon sowie 5,67 g (0,15 Mol ≙ 10 Mol-%) Natriumborhydrid zugesetzt. Nach Verschließen des Autoklaven wird die Reaktion bei 16 bar und 240 °C 5 Stunden gefahren.

Nach Reaktionsende läßt man auf 150 °C abkühlen, entspannt und entnimmt das Reaktionsgemisch. Das Reaktionsgemisch wird schwach angesäuert und das p-Polyarylensulfid durch Filtration isoliert.

Anschließend wird mit Wasser neutral gewaschen und getrocknet. Das p-Polyarylensulfid wird als grau-weißer Feststoff erhalten. Die Schmelzviskosität $\eta m$ (gemessen in Pa.s bei $\tau = 10^2$ Pa) beträgt 1,2 × 103 Pa.s.

Beispiel 9

Wie Beispiel 8, jedoch mit 20 Mol-% Natriumborhydrid. Schmelzviskosität $\eta m = 2{,}15 \times 10^3$ Pa.s (bei $10^2$ Pa gemessen).

Beispiel 10

Wie Beispiel 8, jedoch wurden bei der Entwässerung 59 ml Destillat erhalten, das größtenteils aus Wasser besteht. Während der Reaktion wurde eine Lösung aus 2,84 g (0,075 Mol ≙ 5 Mol-%) Natriumborhydrid in 27,7 g einer 0,2 %igen Natronlauge während der Reaktionszeit von 5 h in 5 Portionen zudosiert.

Das isolierte p-Polyarylensulfid hat eine Schmelzviskosität $\eta m = 1{,}85 \times 10^3$ Pa.s (bei $10^2$ Pa gemessen).

Beispiel 11

Analog DE-OS 3 120 538 wird bei der Reaktion Dimethylacetamid (19,6 g ≙ 15 Mol-%, bezogen auf 1 Mol Natriumsulfid) mit eingesetzt. Ansonsten wird der Versuch gemäß Beispiel 8 gefahren, wobei wie dort ebenfalls eine entsprechende Menge Natronlauge zur Neutralisation von im Ansatz befindlichem Natriumhydrogensulfid eingesetzt wird.

Schmelzviskosität des isolierten p-Polyarylensulfids : $\eta m = 7{,}9 \times 10^3$ Pa.s (bei $10^2$ Pa gemessen).

Beispiel 12

Wie Beispiel 11 jedoch aus 3,26 g (0,018 Mol) 1,2,4-Trichlorbenzol als Verzweiger. Schmelzviskosität des erhaltenen p-Polyarylensulfids : $\eta m = 3{,}4 \times 10^4$ Pa.s (bei $10^2$ Pa gemessen).

Beispiel 13

Wie Beispiel 12, jedoch mit geänderten Reaktionsbedingungen. Es wurde in zwei Temperaturstufen 2 Stunden bei 205 °C und 3 Stunden bei 266 °C gefahren. Das erhaltene p-Polyarylsulfid hatte eine Schmelzviskosität $\eta m = 7{,}9 \times 10^4$ Pa.s (bei $10^2$ Pa gemessen).

Beispiel 14

Das p-Polyarylensulfid des Beispiels 12 konnte ohne Schwierigkeiten direkt thermoplastisch über eine Schneckenmaschine verarbeitet werden. Dagegen waren die p-Polyarylensulfide der Vergleichsbeispiele A und B nicht thermoplastisch verarbeitbar.

Das p-Polyarylensulfid des Beispiels 12 zeigte eine für p-Polyarylensulfide ausgezeichnete Schlagzähigkeit $a_n = 13{,}5\ kJ/m^2$ (gemessen nach DIN 53 453).

Beispiel 15

In einem Stahlautoklaven mit Rührer werden 191,6 g Natriumsulfid-Hydrat (1,455 Mol) zusammen mit 35,3 g 45 %iger Natronlauge (zum Abfangen von Zersetzungsproducten des Natriumformiats, die während der Reaktion freiwerden, und zur Neutralisation von anteilmäßig im Natriumsulfid enthaltenen Natriumhydrogensulfid) und 20,4 g Natriumformiat (0,3 Mol ≙ 20 Mol-%) vorgelegt. Durch langsames Aufheizen bis auf 175 °C werden 48 ml Destillat erhalten, das größtenteils aus Wasser besteht.

Anschließend werden 220,5 g p-Dichlorbenzol (1,50 Mol) und 1,63 g (0,009 Mol) 1,2,4-Trichlorbenzol in 70 ml N-Methylpyrrolidon zugesetzt. Nach Verschließen des Autoklaven wird die Reaktion 5 Stunden bei 240 °C und 17 bar gefahren.

Man läßt nach der Reaktion auf 150 °C abkühlen, entspannt und entnimmt das Reaktionsgemisch, das mit verdünnter Salz- oder Schwefelsäure schwach angesäuert wird. Das Polyarylensulfid wird filtriert und mit Wasser bis zum Neutralpunkt gewaschen und getrocknet.

Das Polyarylensulfid wird als grau-weißer Feststoff isoliert. Die Schmelzviskosität wird bei $10^2$ Pa bestimmt : $\eta m = 9,7 \times 10^2$ Pa.s.

Beispiel 16

Wie Beispiel 15, jedoch wird das Natriumformiat (0,15 Mol ≙ 20 Mol-%) erst nach der Entwässerung zudosiert. Schmelzviskosität $\eta m = 1,1 \times 10^3$ Pa.s (bei $10^2$ Pa gemessen).

Beispiel 17

Wie Beispiel 15, jedoch werden 3,26 g 1,2,4-Trichlorbenzol (0,018 Mol ≙ 1,2 Mol-%) eingesetzt. Schmelzviskosität $\eta m = 4,3 \times 10^3$ Pa.s (bei $10^2$ Pa gemessen).

Beispiel 18

Analog DE-OS 3 120 538 wird bei der Reaktion Dimethylacetamid (19,6 g ≙ 15 Mol-%, bezogen auf 1 Mol Natriumsulfid) mit eingesetzt. Ansonsten wird der Versuch wie Beispiel 15 gefahren, wobei wieder eine entsprechende Menge Natronlauge zur Neutralisation von Natriumhydrogensulfid eingesetzt wird.

Schmelzviskosität des isolierten Polyarylensulfids : $\eta m = 6,9 \times 10^3$ Pa.s (bei $10^2$ Pa gemessen).

Beispiel 19

Wie Beispiel 18, jedoch mit 10,2 g Natriumformiat, entsprechend 10 Mol-% bezogen auf Natriumsulfid.

Schmelzviskosität $\eta m = 4,2 \times 10^3$ Pa.s (bei $10^2$ Pa gemessen).

Beispiel 20

Wie Beispiel 19, jedoch mit einer höheren Verzweigung : 0,015 Mol 1,2,4-Trichlorbenzol, entsorechend 2,72 g (1,0 Mol-%, bezogen auf Natriumsulfid).

Schmelzviskosität $\eta m = 2,3 \times 10^4$ Pa.s (gemessen bei $10^2$ Pa).

Beispiel 21

Wie Beispiel 18, jedoch bei anderen Reaktionsbedingungen gefahren : 2 Stunden bei 205°, 3 Stunden bei 267 °C.

Schmelzviskosität $\eta m = 8,8 \times 10^3$ Pa.s (bei $10^2$ Pa gemessen).

Beispiel 22

Das Polyarylensulfid des Beispiels 18 konnte ohne Schwierigkeiten direkt thermoplastisch über eine Schneckenmaschine verarbeitet werden. Dagegen waren die p-Polyphenylensulfide der Vergleichsbeispiele A und B nicht thermoplastisch verarbeitbar.

Das Polyarylensulfid des Beispiels 18 zeigte eine für Polyarylensulfide ausgezeichnet Schlagzähigkeit $a_n = 22,3$ kJ/m$^2$ (gemessen nach DIN 53 453).

**Patentanspruch**

Verfahren zur Herstellung von gegebenenfalls verzweigten, hochmolekularen Polyarylensulfiden mit hoher Schmelzviskosität, dadurch gekennzeichnet, daß

a) Dihalogenbenzole, von denen 100 bis 0 Mol-%, der Formel (I)

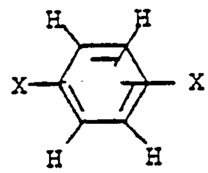

(I)

und 0 bis 100 Mol-% der Formel (II) entsprechen,

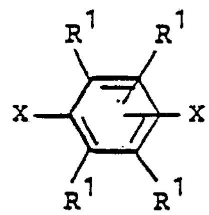

(II)

in denen

X für zueinander meta- oder para-ständiges Chlor oder Brom steht, und

$R^1$ gleich oder verschieden ist und Wasserstoff $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, wobei zwei zueinander orthoständige Reste R zu einem aromatischen oder 6-gliedrigen heterocyclischen Ring, der bis zu drei Heteroatome wie O, N, S enthalten kann, verknüpft sein können, und immer ein Rest $R^1$ verschieden von Wasserstoff ist und

b) 0 bis 3,0 Mol-%, bezogen auf die Summe der Dihalogenaromaten der Formel (I) und (II), eines Tri- oder Tetrahalogenaromaten, der Formel (III)

$$ArX_n \quad \text{(III)},$$

wobei

Ar ein aromatischer oder heterocyclischer Rest, der bis zu drei Heteroatome wie N, O, S enthalten kann mit 6-24 C-Atomen ist,

X für Chlor oder Brom steht und

n 3 oder 4 ist,

c) Alkalisulfide, gegebenenfalls zusammen mit Alkalihydroxiden, wobei das molare Verhältnis von (a + b) : c im bereich von 0,85 : 1 bis 1,15 : 1, bevorzugt 0,95 : 1 bis 1,05 : 1 liegt,

d) in einem polaren Lösungsmittel, gegebenenfalls in Anwesenheit von weiteren Cosolventien und gegebenenfalls in Gegenwart von Katalysatoren, und das molare Verhältnis von c) zu d) im Bereich von 1 : 2 bis 1 : 15 liegt, in Gegenwart von Reduktionsmitteln ausgewäht aus der Gruppe der Hydrazine, Borhydride und Alkaliformiaten.

**Claim**

A process for the preparation of optionally branched high molecular weight polyarylene sulphides having a high fusion viscosity, characterised in that

a) dihalogenobenzene, 100 to 0 mol-% of which correspond to formula (I)

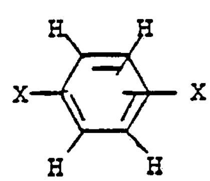

(I)

and 0 to 100 mol-% of which correspond to formula (II)

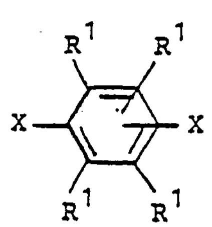

(II)

in which the symbols

X stand for chlorine or bromine in the meta- or para-position to one another and the symbols

$R^1$ may be identical or different and stand for hydrogen, $C_1$-$C_{20}$-alkyl, $C_5$-$C_{20}$-cycloalkyl, $C_6$-$C_{24}$-aryl, $C_7$-$C_{24}$-alkaryl or $C_7$-$C_{24}$-aralkyl and two groups R which are in the ortho-position to one another may be linked together to form an aromatic or 6-membered heterocyclic ring which may contain up to three hetero atoms such as O, N or S and one of the groups $R^1$ is always different from hydrogen and

b) 0 to 3.0 mol-%, based on the sum of the dihalogenated aromatic compounds corresponding to formula (I) and (II), of a tri- or tetrahalogenated aromatic compound corresponding to formula (III)

$$ArX_n \qquad (III)$$

wherein

Ar denotes an aromatic or heterocyclic group which has 6 to 24 carbon atoms and may contain up to three hetero atoms such as N, O or S,

X stands for chlorine or bromine and

n denotes the number 3 or 4,

c) alkali metal sulphides, optionally together with alkali metal hydroxides such that the molar ratio of (a + b) : c lies in the range of from 0.85 : 1 to 1.15 : 1, preferably from 0.95 : 1 to 1.05 : 1, are reacted together

d) in a polar solvent used in such quantity that the molar ratio of c) to d) is in the range of from 1 : 2 to 1 : 15, optionally in the presence of other cosolvents and optionally in the presence of catalysts, in the presence of reducing agents selected from hydrazine, boron hydrides and alkali metal formates.

**Revendication**

Procédé de préparation de sulfures de polyarylène à haut poids moléculaire, éventuellement ramifiés, à haute viscosité à l'état fondu, caractérisé en ce que l'on fait réagir

a) des dihalogénobenzènes dont 100 à 0 mol % répondent à la formule I

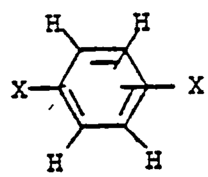

(I)

et 0 à 100 mol % répondent à la formule II

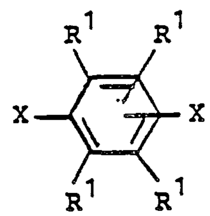

(II)

dans lesquelles

les symboles X représentent le chlore ou le brome en position mutuelle méta ou para, et

les symboles $R^1$, ayant des significations identiques ou différentes, représentent chacun l'hydrogène, un groupe alkyle en $C_1$-$C_{20}$, cycloalkyle en $C_5$-$C_{20}$, aryle en $C_6$-$C_{24}$, alkylaryle en $C_7$-$C_{24}$ ou aralkyle en $C_7$-$C_{24}$, deux groupes R en position mutuelle ortho pouvant être reliés avec formation d'un cycle aromatique ou hétérocyclique à 6 chaînons qui peut contenir jusqu'à 3 hétéroatomes tels que O, N, S, étant spécifié qu'il y a toujours au moins un symbole $R^1$ qui représente un substituant autre que l'hydrogène, et

b) 0 à 3,0 mol %, par rapport à la somme des composés dihalogénoaromatiques de formule I et II, d'un composé tri- ou tétra-halogénoaromatique de formule III

$$ArX_n \qquad (III),$$

dans laquelle

Ar représente un groupe aromatique ou hétérocyclique qui peut contenir jusqu'à 3 hétéroatomes tels que N, O, S et contient 6 à 24 atomes de carbone,

X représente le chlore ou le brome et

n est égal à 3 ou 4,

c) des sulfures alcalins, éventuellement avec des hydroxydes alcalins, le rapport molaire (a + b) : c se situant dans l'intervalle de 0,85 : 1 à 1,15 : 1, de préférence de 0,95 : 1 à 1,05 : 1,

d) dans un solvant polaire, éventuellement en présence d'autres solvants auxiliaires et éventuellement en présence de catalyseurs, le rapport molaire c) : d) se situant dans l'intervalle de 1 : 2 à 1 : 15, en présence d'agents réducteurs choisis dans le groupe formé par les hydrazines, les borohydrures et les formiates alcalins.